Europäisches Patentamt

**European Patent Office**

Office européen des brevets

(11) Publication number: **0 158 974**
**A1**

## (12) EUROPEAN PATENT APPLICATION

(21) Application number: **85104371.1**

(22) Date of filing: **11.04.85**

(51) Int. Cl.⁴: **C 03 B 5/12**

(30) Priority: **16.04.84 US 600370**

(43) Date of publication of application:
**23.10.85 Bulletin 85/43**

(84) Designated Contracting States:
**DE FR GB NL**

(71) Applicant: **Carman, Justice N.**
**333 Escuela Avenue, Apt. 129**
**Mountain View California 94040(US)**

(72) Inventor: **Carman, Justice N.**
**333 Escuela Avenue, Apt. 129**
**Mountain View California 94040(US)**

(74) Representative: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Method and apparatus for making fused quartz and for forming glass tubing.**

(57) A furnace for making glass comprising a first chamber (10) and a hopper (11) for feeding glass making ingredients (12) into the first chamber (10) with a heater (37) for melting the ingredients (12). A second chamber (16) cnnected to a transfer tube (51) leading to the first chamber and including an extruder (17) for extruding the molten glass. An on-off valve (15) in the transfer tube (51) allows sealing between the chambers and the controlling of the individual pressures in each chamber such that vacuum melting can be effected in the first chamber (10) and the pressure in the second chamber (16) regulated to control the extrusion process while batch melts are periodically fed from the first (10) to the second chamber (16).

Fig 1

EP 0 158 974 A1

Croydon Printing Company Ltd

Method and Apparatus for Making Fused Quartz and for
Forming Glass Tubing


This invention relates to a furnace adapted for
making refractory glasses such as quartz glass and other
glass compositions that are enhanced by vacuum melting.

## Background of the Invention

Quartz glass, which is vitreous silica (SiO2) and is
sometimes called fused quartz, is the only single component
glass produced commercially. Its properties make it valuable
but also expensive. Quartz glass has by far the highest
melting temperature of any glass. It has a very low
coefficient of thermal expansion, has desirable light
transmission properties, is extremely inert chemically and
though brittle, is very strong. By adding small to moderate
amounts of other oxides such as titania (TiO2), some of
these properties can be enhanced and in all cases the
viscosity at a given elevated temperature is lower than pure
silica.

Quartz glass is made by melting quartz sand, a
crystalline material, above its melting point of 172o degree
Centigrade. As a liquid it is extremely viscous and even at
its boiling point, above 25oo degree centigrade, it is so
viscous that bubbles rise slowly and many remain even after several days time. This high melting temperature makes quartz glass manufacture an energy intensive process requiring a large capital investment. Suppliers of this glass have chosen to keep their processes and furnace designs secret which severely limits the process knowledge that is generally known and furnace design information is almost non-existent. Quartz blowers and fabricators who use the tubing and cast quartz glass daily know its properties but can only speculate about the way it is made. They know that no bubble-free quartz glass is sold although some bubble-free material is inadvertently produced and can be selected out by examination.

One of the primary problems in making quartz glass is the elimination of bubbles and one type of apparatus for reducing bubbles in the liquid glass mixture and for reducing the introduction of impurities into the glass mixture from the furnace is described in the co-pending U.S. Application Serial No. 81/01134 filed on August 24, 1981 and entitled Glass Making Furnace, with the same inventor as this application. The contents of that application are incorporated into this application by reference. The use of tungsten or molybdenum furnace walls is disclosed in that application.

Another solution to the bubble problem is shown in the 1925 U.S. Patent of P.K. Devers No. 1,536,821 in which it is stated: "The method of making vitreous silica which consists in fusing silica in an enclosed space while maintaining a vacuum in said space and thereupon compressing the fusion at a pressure high enough to substantially eliminate bubbles." Although the process is still in use it is a batch process applicable primarily to make very large boules.

U.S. Patent No. 2,306,164 to Harrison describes apparatus for extruding tubes of glass using a gas pressure head to force the glass through the "complimentary core and die plates forming an extrusion head." This is also a batch process in that the pressure must be released in order to reload the melting chamber.

The use of a solidified glass plug to block the flow from a glass furnace was disclosed in German Auslegeschrift 2,842,505 published 8-11-79: "When the furnace is to be tapped, the inductor coil, and possibly additional heating, is employed to preheat the solid glass plug until direct resistance heating melts out the solid plug, which is driven out of the nozzle brick by the hydrostatic pressure of the molten glass in the furnace."

This invention employs some of the art taught in each of these patents and combines them with new variations to create a new glass technology.

## Summary of the Invention

A batch of high purity crystalline quartz is gradually heated in a molybdenum or tungsten crucible contained in a vacuum-pressure chamber. The vacuum pump is started at or below 570 degrees Centigrade and continues at least until the quartz passes its melting point, 1720 degree Centigrade, before pumping is discontinued. Then the chamber is back filled with a substantial pressure of helium, nitrogen or argon containing a small amount of hydrogen. A bubble-free batch of vitreous silica is thereby obtained. This effect is enhanced and a more homogenous batch is achieved by increasing the temperature 200-500 degrees Centigrade above the melting point thereby reducing the viscosity of the melt so that the bubbles flow more readily.

The present application uses this technique to provide bubble-free quartz by combining a pressurized and various extrusion heads to produce rod, tubing, fiber or gobs. The two steps of the process are inherently incompatible because intermittent vacuum melting conflicts with constant temperature and pressure required for continuous extrusion. For this reason the two chambers are separated from each other by a transfer tube in which is located an on-off valve having no moving parts. This mechanism operates in the normally off mode by including a section that can be cooled by the circulation of cool gas around its perimeter to keep the glass on the inside solid thereby blocking the only passage for fluid and making the melting chamber vacuum-tight. When the processing of a batch of glass has been completed and in the batch chamber brought to the temperature and pressure in the continuous extrusion chamber, this on-off valve may be turned on allowing the new glass to be transferred to the reservoir. This is accomplished by heating the cooled section of the transfer tube, the on-off valve, and melting the blocking plug of solid glass. Pressure can be used to force the plug out as soon as the plug outer periphery has softened, however it is generally preferable to wait until the glass plug has become completely melted to let it enter the reservoir. This can easily be done by proper manipulation of the chamber pressure.

Thus, high melting glass can be extruded continuously.

## Description of the Drawings

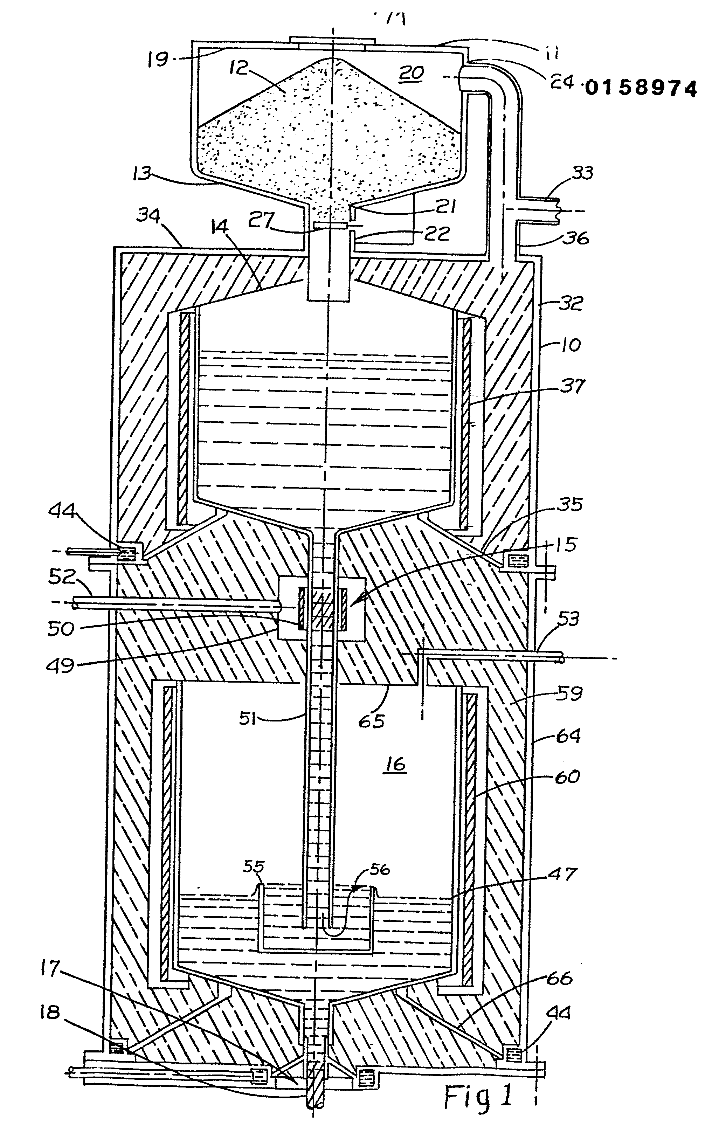

Figure 1 is a cross sectional view of a furnace for making quartz glass and incorporating the present invention.

## Description of the New Glass Making Process

In accordance with the present invention, vacuum melting as employed in the furnace is a batch process in which the raw starting material is slowly heated in a melting tank while a vacuum pumping system removes the absorbed, chemically bonded and entrapped gases. Enough premixed sand to make several batches is loaded into a vacuum supply hopper. The only raw material necessary to make quartz glass is crystalline quartz sand. Other crystalline oxides, known as modifiers, may be mixed with the quartz sand to make various high melting glasses that lend themselves to vacuum melting. Cullet, ground-up glass that has been melted once, is commonly mixed with the other starting materials; however in vacuum melting this is preferably omitted. Crystalline oxides such as quartz have sharp melting temperatures. Quartz glass cullet, already converted to the glassy state, does not have a sharp melting point but softens gradually. When being heated to a progressively higher temperature cullet may seal up the escape routes thereby entrapping gases while its temperature is considerably below the crystalline melting point. Certain of the lower melting oxides are also unsuitable for vacuum melting.

The process may begin by pumping a partial vacuum in a supply hopper bringing the raw ingredient as it is heated to a temperature between 250 degrees and 400 degrees Centigrade. This ingredient supply held indefinitely in the heated vacuum is instantaneously available to be fed into a vacuum melter. The melting tank, preferably having tungsten, molybdenum or rhenium walls, is ready to accept a new glass load when its temperature is lowered below 570 degrees Centigrade. As vacuum pumping continues the furnace is gradually heated at a programmed rate. As the temperature increases the vapor pressure of the silica increases reaching a pressure of 2x10-4 torr at the quartz crystal melting point 1720 degrees Centigrade. By heating slowly but steadily up to this critical temperature the residual gas throughout the sand is swept out and is replaced by gaseous silica ($SiO_2$) including its derivatives before the crystalline quartz grains melt to block the escape routes. Above 1720 degrees Centigrade the charge is full of $SiO_2$ bubbles which will condense out when pressure is applied. At a point slightly above the temperature the vacuum pump is turned off and the chamber may be backfilled with argon containing a little hydrogen. The melting chamber is heated still further however in order to homogenize and lower the viscosity of the contained charge so that the bubbles will completely collapse and it can be transferred to the extruding reservoir below. If desirable, the batch may be heated to much higher temperature during which time the chamber gas pressure may be increased to suppress vaporization. Gaseous silica at these temperatures fractionates and spontaneously produces small concentrations of oxygen and silicon monoxide as follows: $2SiO_2 \rightarrow O_2 + 2SiO$. At 2070 degrees Centigrade the equilibrium is strongly to the

left as the SiO pressure is approximately 10-3 torr whereas the SiO2 is 6x10-5 torr. However to protect the bare tungsten or molybdenum walls of the melting chamber the argon backfilling gas should contain between 0.1% and 10% hydrogen. Unfortunately, the hydrogen used to protect the metal walls reacts with the fractionated oxygen from the silica forming water. This water tends to contaminate the surface of the melt making it necessary to limit the time the melt is held at high temperature to a minimum.

To transfer the liquid charge from the melting tank to the extruding reservoir, a valve is opened and pressure in the melting chamber forces the glass through the transfer tube and a trap into the lower reservoir. The transfer tube and trap are filled with glass at all times thereby avoiding any large bubbles that could otherwise be created if the glass were allowed to drop by gravity for a significant interval. When the bulk of the charge has been drained or when the extruding reservoir is nearly full, the on-off valve must be turned off. A liquid level sensor can be used to warn when the level nears the full mark. At the critical time two things take place simultaneously: (a) the pressure in the melt chamber is reduced to a level equal to or slightly below that in the extrusion reservoir, (b) the valve is closed by turning on the cooling gas system.

The valve controlling the flow of the glass melt from the melting tank preferable comprises a tube formed with heat conducting walls and a heater and cooling means in heat conducting relationship with the walls. For closing the valve the cooling means is energized to harden the glass in the tube thereby forming a sealing plug. To open the valve the heater is energized to make the plug fluid and allow glass to flow through the valve. Thus a valve with no moving parts is provided for trouble free operation.

Meanwhile the level of glass in the extruding reservoir has been raised substantially. The change in "head" pressure over the extrusion apparatus normally would cause a discontinuity in drawing if it weren't for the fact that the chamber gas pressure above the reservoir is automatically adjusted. The fresh glass just transferred in may be at a slightly different temperature than that in the extrusion zone. For that reason enough glass is stored in the extrusion zone to allow continued drawing for some time, long enough for the temperature of the new glass to equalize with that in the extruder. The extruder is capable of operating continuously for as long as desired. If, however, the machine is to be turned off, the temperature can be reduced to an idling temperature, perhaps 1000 degrees Centigrade, and the pressure may be reduced to temporarily terminate flow.

This invention discloses apparatus for producing glass rod, tubing, fiber or gobs which require the following adjustments, all of which can be made during operation:

    1. Extrusion temperature to control viscosity.

    2. Gas pressure over the reservoir.

    3. Tractor pulling rate on fiber, rod or tubing.

Temperature controls viscosity which effects the extrusion rate sluggishly, but more importantly, controls the force required by the tractor apparatus to pull the rod or tube from the extruder. Cooler glass require more pulling force whereas warmer glass uses less. Chamber gas pressure can be adjusted very rapidly, the response time being at least one hundred to one thousand times as fast as temperature adjustments. Therefor gas pressure controls the production rate.

It is important to note that the glass contacts only walls of tungsten, molybdenum, rhenium or alloy combinations of these metals from the vacuum chamber through the extruder. This eliminates contamination of the glass from furnace walls. That problem has been particularly severe in high temperature glasses and can not be tolerated in semiconductor quartz glass. Although the inside surfaces of the tungsten are protected from oxidation by being covered with glass it is essential to protect the outside surface also and hydrogen is used for this purpose throughout. In the evacuated zones a low volume continuous flow of hydrogen passes over all hot external tungsten surfaces. When pressure is being used the gas is helium or preferably argon mixed with 0.1% to 10% hydrogen.

## Description of a Furnace Embodying The New Process for Making Glass

Shown in the figures is a preferred embodiment of the invention for making such glass products as quartz-glass (sometimes called fused quartz) and comprising a vacuum melting section 10 into which is fed the ingredients for making glass from a hopper 11 (Figure 1). The quartz sand 12 is placed in the hopper and heated under subatmospheric pressures to preheat and dry the sand. Thereafter a valve 27 is opened and the hot dry sand is fed into the melting reservoir 14 and a vacuum pump is attached to pipe 36A, activated to continue to pump until the crystalline quartz sand melts at above 1720 degrees Centigrade. The warm dry sand is fed at a temperature (250 degrees to 570 degrees Centigrade) well below the point where the grains begin to sinter and adhere to each other. It has been found that pumping removes residual air, absorbed moisture and chemically bound gases as the temperature of the sand gradually increases. The sand particles begin to sinter together in the temperature range between 1200 degrees and 1700 degrees Centigrade.

The vaporization of the silica starts very shortly but increases steadily before reaching a level of 10-5 torr at about 1600 degrees Centigrade and 2x10-4 torr at its melting point of 1720 degrees Centigrade. By continuous pumping at that temperature gas in the chamber is almost exclusively silicon dioxide vapor. At some temperature in this range the individual grains sinter together and the pores are completely closed to the escape of gases. At a temperature slightly above the melting point the vacuum pump is turned off and the chamber is backfilled with argon containing a small amount of hydrogen. This step collapses the bubbles and they completely disappear because the only gaseous specie in them is silicon dioxide, the same as the sand grains. The temperature is raised still further until the liquid silica becomes quite fluid. When the quartz has been thoroughly melted an on-off valve 15 is opened and the liquid is driven into a drawing reservoir 16 through a trap 55. The reservoir 16 supplies an extruder 17 producing the quartz glass rod, cylinder or fiber 18.

The hopper 11 includes a funnel-shaped side wall 13 and a top wall 19 forming a closed cavity 20 into which the glass making ingredients are loaded. This hopper can include a powered vibrator (not shown) to feed the ingredients through a bottom opening 21 into a conduit 22 leading to the melting tank. Preferably the hopper is airtight so a vacuum can be drawn for the partial de-gassing of the ingredients. The hopper may also contain a heating means (not shown) to aid the de-gassing. The vacuum is drawn through the outlet 24 which connects with a vacuum pump (not shown).

The melting tank section 10 includes a tungsten melting tank 14 having an outer vacuum housing comprised of cylindrical side walls 32, a top wall 34, and a bottom wall 35. The housing is airtight and a vacuum is drawn through the conduit 36 connecting with a vacuum system (not shown) attached to a conduit 33. Positioned within the tungsten melting tank 14 is a cylindrical tungsten heater 37 which is supplied electrical energy through a terminal connector (not shown) for heating the glass making ingredients to a melting temperature. Infrared sensors (not shown) can be positioned in the side of this section for detecting the temperature of the liquid at the various levels. The liquid level can be sensed by the liquid level sensor (not shown) located in the top wall 34.

A water cooled support 35 in the form of an inverted truncated cone supports the bottom of the melting tank in a manner to allow for the necessary thermal expansion. A water cooled passage 44 cools and thermally isolates this support. When the glass ingredients are molten and ready for the extrusion process, the valve 15 is opened and the gas pressure is increased to a level somewhat higher than that in the extrusion reservoir 16 to force the glass through a conduit 51. The valve 15 encompasses the center positioned conduit 51 surrounded by a tungsten heating coil 49 and a jacket 50 for cooling gas. When cooling gas is supplied from a source (not shown) through a conduit 52 connecting with the interior of the jacket 50 the molten glass within the conduit 51 is cooled and solidified to form a plug and effectively close the valve by sealing between the melting tank 34 and the extrusion reservoir 16. When it is desired that molten glass flow through the valve, the gas pump is stopped and the tungsten heater 49 is energized for supplying electrical energy to the heater. This heater heats the conduit 51 sufficiently to melt the glass therein which begins flow from the melting tank. Thus, a control valve is supplied with no moving parts except the glass itself, which valve functions effectively in the high temperature environment of the furnace.

The conduit 51 extends downward to a position substantially at the bottom of the reservoir 16. From the conduit the glass flows around and upward through a trap formed by a tungsten cylinder 55 and in the direction of the arrows 56. The extrusion reservoir is sized to maintain a minimum level of molten glass and to receive a full charge of molten glass from the melting tank 14. The melting tank is insulated by heat insulation 59 and includes a cylindrical tungsten heater 60 which is supplied electric current through a terminal (not shown) for maintaining the glass in molten form so that it can be drawn. Infrared sensors (not shown) can be positioned in the side wall 64 of the outer housing for sensing the temperature of the tungsten reservoir wall 47. The heat shields and insulation includes openings (not shown) to allow the detection of this temperature by use of heat sensors. The housing includes a bottom wall 66 with a support 67 and water cooling passages 68 for thermally insulating the support leading to the outer wall 64.

This glass furnace is operated by providing vacuum melted batches of glass in the tungsten melting tank, but functions as a continuous process by the periodic recharging of the extruder reservoir through the on-off valve with no moving parts. The overall height of the furnace has been compressed somewhat for clarity of the drawings and this height is preferably on the order of five to eight feet plus the drawing length of rod or tubing. By vertically positioning the various glass making components and drawing the cylinder downward at regulated speeds, a close control over the process is maintained with use of a relatively simple apparatus. The pressure within the holding tank 16 is controlled by drawing a vacuum or supplying pressured gas through a conduit 53 primarily for the purpose of adjusting the extrusion flow rate through the extruder 17.

Claims

1. A furnace for making glass comprising:

a first chamber;

means to introduce glass making ingredients into said first chamber;

means to heat said first chamber to melt and refine said ingredients therein;

a second chamber;

a transfer tube connecting said first and second chamber to allow the flow of molten glass from said first chamber to said second chamber;

an extruder connected to receive molten glass from said second chamber;

an on-off valve for sealing said transfer tube and stopping the flow of molten glass from first chamber to said second chamber; and

means to separately control the gas pressures within each chamber to allow degassing of the glass making ingredients in said first chamber and to regulate the extrusion of the glass from said second chamber.

2. A furnace as defined in Claim 1 wherein said means to separately control the gas pressures includes means to draw a partial vacuum in said first chamber during melting and refining to outgas said glass making ingredients therein.

3. A furnace as defined in Claim 1 wherein said on-off valve includes means to lower the temperature of the molten glass in said transfer tube thereby to cool the glass therein and cause it to solidify and seal said transfer tube.

4. A furnace as defined in Claim 3 including means to heat the glass in said transfer tube to above melting temperature thereby to open said transfer tube and allow molten glass to flow from the first chamber to said second chamber.

- 13 -

0158974

5. A furnace as defined in Claim 4 wherein said means to control gas pressure includes means to effect a pressure differential between the first and second chambers to cause the molten glass to flow from the first chamber to the second chamber.

6. The method of making glass, comprising the steps of:

providing a furnace having first and second chambers connected by a transfer tube;

providing an on-off valve in said transfer tube;

operating said on-off valve to seal against the flow of any fluid between said chambers;

introducing glass making ingredients into said first chamber;

heating the glass making ingredients to form a batch of molten glass;

operating said on-off valve to allow the flow to transfer the molten glass batch from said first chamber to said second chamber;

providing an extruder to receive molten glass from said second chamber; and

operating said extruder continuously while batches of molten glass are fed to the second chamber from the first chamber.

7. The method as defined in Claim 6 including the step of controlling the atmospheric pressure in said second chamber to regulate the flow of glass through said extruder.

8. The method as defined in Claim 6 including the step of drawing a partial vacuum in said first chamber to outgas the glass making ingredients and reduce the quantity of gas bubbles in said molten glass.

9. The method as defined in Claim 6 wherein the operation of the on-off valve is effected by heating and cooling the molten glass in said transfer tube.

10. A furnace for making glass comprising:

a first chamber;

means to introduce glass making ingredients into said first chamber;

means to heat said first chamber to melt and refine said ingredients therein;

a second chamber;

a transfer tube connecting said first and second chambers to allow the flow of molten glass from said first chamber to said second chamber;

an extruder connected to receive molten glass from said second chamber;

an on-off valve for sealing said transfer tube and stopping the flow of molten glass from first chamber to said second chamber; and

means to separately control the gas pressures within each chamber to pull a vacuum in said first chamber to allow degassing of the glass making ingredients as they are being heated at least to the point where all crystalline species liquify and then to apply pressure over that molten glass in said first chamber and in said second chamber to continuously regulate the pressure to force the extrusion of the glass from said second chamber.

11. The method of making glass, comprising the steps of:

providing a furnace having first and second chambers connected by a transfer tube;

providing an on-off valve in said transfer tube;

operating said on-off valve to seal against the flow of any fluid between said chambers;

introducing glass making ingredients into said first chamber;

heating the glass making ingredients while pulling a vacuum to allow degassing of said glass making ingredients as they are being heated at least to the point where all crystalline species liquify and then (to form a batch of) to apply pressure to drive any gas existing as bubbles into solution in the molten glass;

operating said on-off valve to allow the flow to transfer the molten glass batch from said first chamber to said second chamber;

providing an extruder to receive molten glass from said second chamber; and

operating said extruder continuously while batches of molten glass are fed to the second chamber from the first chamber.

0158974

Fig 1

European Patent
Office

**EUROPEAN SEARCH REPORT**

**0158974**
Application number

EP 85 10 4371

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | WO-A-8 300 685 (CARMAN) <br> * Whole document * | 1-11 | C 03 B 5/12 |
| X | US-A-4 195 982 (COUCOULAS) <br><br> * Whole document * | 1,6,10 ,11 | |
| A | WO-A-8 304 245 (CARMAN) <br><br> * Whole document * & US - A - 4 504 302 (Cat. A,D) | 1,6,10 ,11 | |

TECHNICAL FIELDS
SEARCHED (Int. Cl.4)

C 03 B 5/00
C 03 B 17/00

The present search report has been drawn up for all claims

| Place of search THE HAGUE | Date of completion of the search 24-05-1985 | Examiner VAN DEN BOSSCHE W.L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82